# EUROPÄISCHE PATENTSCHRIFT

(11) **EP 0 697 131 B1**
(45) Veröffentlichungstag und Bekanntmachung des Hinweises auf die Patenterteilung: **24.06.1998**
(21) Anmeldenummer: 94914318.4
(22) Anmeldetag: 29.04.1994
(51) Int. Cl.: H01F 38/28

(54) **METALLGEKAPSELTE HOCHSPANNUNGSSCHALTANLAGE MIT EINEM STROMWANDLER**
METAL-ENCLOSED HIGH-VOLTAGE SWITCHGEAR WITH A CURRENT TRANSFORMER
INSTALLATION DISTRIBUTRICE HAUTE TENSION A BLINDAGE METALLIQUE ET COMPORTANT UN TRANSFORMATEUR DE COURANT

(30) Priorität: 07.05.1993 DE 4315772
(43) Veröffentlichungstag der Anmeldung: 21.02.1996
(73) Patentinhaber: SIEMENS AKTIENGESELLSCHAFT, 80333 München (DE)
(72) Erfinder: SUERMANN, Berthold, D-10783 Berlin (DE); GORABLENKOW, Jörg, D-13591 Berlin (DE)
(86) Internationale Anmeldenummer: DE9400500
(87) Internationale Veröffentlichungsnummer: WO9427306

(56) Entgegenhaltungen:
- EP-A- 0 063 636
- EP-A- 0 215 728
- CH-A- 514 923
- DE-C- 612 070

## Beschreibung

Die Erfindung bezieht sich auf eine metallgekapselte Hochspannungsschaltanlage mit einem zylindrischen Kapselungsgehause und einem in diesem angeordneten Stromwandler, dessen Sekundarwicklung einen Hochspannungsleiter koaxial umgibt, wobei zwischen der Sekundarwicklung des Stromwandlers und dem Hochspannungsleiter ein an seinem ersten Ende mit dem Kapselungsgehause leitend verbundenes und an den übrigen Stellen von diesem elektrisch isoliertes erstes Rohr sowie ein zweites Rohr vorgesehen ist.

Eine derartige Hochspannungsschaltanlage ist beispielsweise aus der EP-A-0 063 636 bekannt. Bei der dort beschriebenen Hochspannungsschaltanlage soll ein Ringkernstromwandler derart abgeschirmt werden, daß an den Meßklemmen keine Überspannungen infolge von Wanderwellen innerhalb des Kapselungsgehauses auftreten. Zu diesem Zweck ist dort ein mit der Kapselung elektrisch leitend verbundener, das Rohr teilweise elektrisch isoliert überlappender elektrisch leitender Abschirmkörper vorgesehen.

Der vorliegenden Erfindung liegt die Aufgabe zugrunde, bei einer Metallgekapselten Hochspannungsschaltanlage der eingangs genannten Art den Aufbau konstruktiv zu vereinfachen, eine gute Abschirmung des Stromwandlers zu erreichen und den Aufwand für die Montage des Stromwandlers in dem Kapselungsgehause möglichst zu verringern.

Die Aufgabe wird erfindungsgemäß dadurch gelöst, daß das erste Rohr an seinem zweiten Ende mit dem zweiten Rohr leitend verbunden ist, das unter Zwischenlage einer Isolierschicht an der Innenwand des Kapselungsgehauses derart anliegt, daß die Anlagefläche in Axialrichtung des Kapselungsgehäuses eine Länge aufweist, die groß ist gegen die Dicke der Isolierschicht.

Das erste Rohr kann beispielsweise durch das Tragrohr eines Ringkernstromwandlers gebildet sein. Dieses Tragrohr ist dann an seinem einen Ende an der Innenwand des Kapselungsgehauses beispielsweise mittels einer Verschraubung befestigt. Das zweite Ende des Rohres darf dann nicht leitend mit dem Kapselungsgehause verbunden sein, da sich sonst eine die Ringkerne umgebende Leiterschleife ergeben würde, in der durch den in dem Hochspannungsleiter fließenden Primärstrom Ströme induziert werden könnten. Andererseits sollte zwischen dem zweiten Ende des Rohres und dem Kapselungsgehause kein zu großer Zwischenraum vorhanden sein, da durch einen solchen Raum Wanderwellen in den Bereich der Sekundärwicklung eindringen könnten, die dann an den Meßklemmen des Stromwandlers Überspannungen verursachen würden.

Um diesen Zwischenraum zu schließen, ist erfindungsgemäß ein zweites Rohr vorgesehen, das mit dem ersten Rohr leitend verbunden ist, von dem Kapselungsgehause jedoch durch die Isolierschicht getrennt ist. Das zweite Rohr liegt vorzugsweise an seinem Umfang unter Zwischenlage der Isolierschicht an der Innenwand des Kapselungsgehauses an. Dabei ist die Dicke der Isolierschicht klein gegenüber der axialen Erstreckung des Anlagebereiches des zweiten Rohres an der Isolierschicht.

Durch die Isolierschicht ist somit die die Ringkerne umgebende Leiterschleife unterbrochen. Dennoch ist durch einen im Verhaltnis zu seiner Lange relativ schmalen Zwischenraum zwischen dem zweiten Rohr und der Innenwand des Kapselungsgehauses eine weitgehende Abdichtung des Stromwandlers gegen Wanderwellen gewahrleistet.

Eine vorteilhafte Ausgestaltung der Erfindung sieht vor, daß das zweite Rohr mit dem ersten Rohr in axialer Richtung wenigstens teilweise überlappt.

Diese Konstruktion erweist sich in bezug auf die axiale Länge des Stromwandlers als platzsparend.

Eine weitere vorteilhafte Ausgestaltung der Erfindung sieht vor, daß die Isolierschicht aus einem Werkstoff besteht, der elektromagnetische Wellen stark dämpft. Der Werkstoff kann beispielsweise aus einem mit dampfenden Materialien gefüllten Epoxidharz bestehen.

Durch die Auswahl eines solchen, die elektromagnetischen Wellen stark dampfenden Werkstoffes ist eine noch effektivere Abdichtung des Stromwandlers gegenüber Wanderwellen und anderen elektromagnetischen Störimpulsen gewährleistet.

Die Erfindung kann außerdem vorteilhaft dadurch ausgestaltet sein, daß die Isolierschicht aus einem Kunststoff besteht.

Ein solcher Kunststoff ist leicht verarbeitbar, insbesondere auch gießfahig, so daß er sich wahlweise entweder auf die Innenwand des Kapselungsgehauses oder auf die Außenwand des zweiten Rohres aufbringen oder in montiertem Zustand des Stromwandlers in den Zwischenraum zwischen der Innenwand des Kapselungsgehauses und dem zweiten Rohr eingießen läßt.

Eine weitere vorteilhafte Ausgestaltung der Erfindung sieht vor, daß das zweite Rohr mit der Innenwand des Kapselungsgehauses mittels der Isolierschicht verklebt ist.

Durch die Auswahl eines geeigneten Werkstoffes für die Isolierschicht kann somit der Stromwandler innerhalb des Kapselungsgehauses zusätzlich sicher fixiert werden. Die Isolierschicht kann auch zusätzlich mechanische Schwingungen des Kapselungsgehauses abdampfen.

Die Erfindung kann außerdem vorteilhaft dadurch ausgestaltet sein, daß das erste Rohr mit dem zweiten Rohr einstückig zusammenhängt, insbesondere daß das erste Rohr und das zweite Rohr als ein einziges Gußteil ausgebildet sind.

Das Tragrohr des Stromwandlers kann somit zusammenhangend mit dem zweiten Rohr als ein einziges Teil gegossen werden, wodurch sich die Montagekosten deutlich verringern. Auch die Abschirmelektroden des Stromwandlers können in diesen Gußkörper integriert sein.

Die Erfindung kann außerdem vorteilhaft dadurch ausgestaltet werden, daß das zweite Rohr mittels einer Abschirmelektrode des Stromwandlers mit dem ersten Rohr leitend verbunden ist.

Die Abschirmelektroden können als getrennte Teile auf das erste Rohr aufgeschraubt sein und eine der Abschirmelektroden kann dann das zweite Rohr tragen.

Es kann außerdem vorteilhaft vorgesehen sein, daß das zweite Rohr als nach außen umgebogene Krempe des ersten Rohres ausgebildet ist.

Dadurch lassen sich das erste Rohr und das zweite Rohr kostengünstig herstellen und zusammen einfach montieren. Auch eine Abschirmelektrode kann in diesen Körper integriert sein.

Im folgenden wird die Erfindung anhand eines Ausführungsbeispiels in einer Zeichnung gezeigt und anschließend beschrieben.

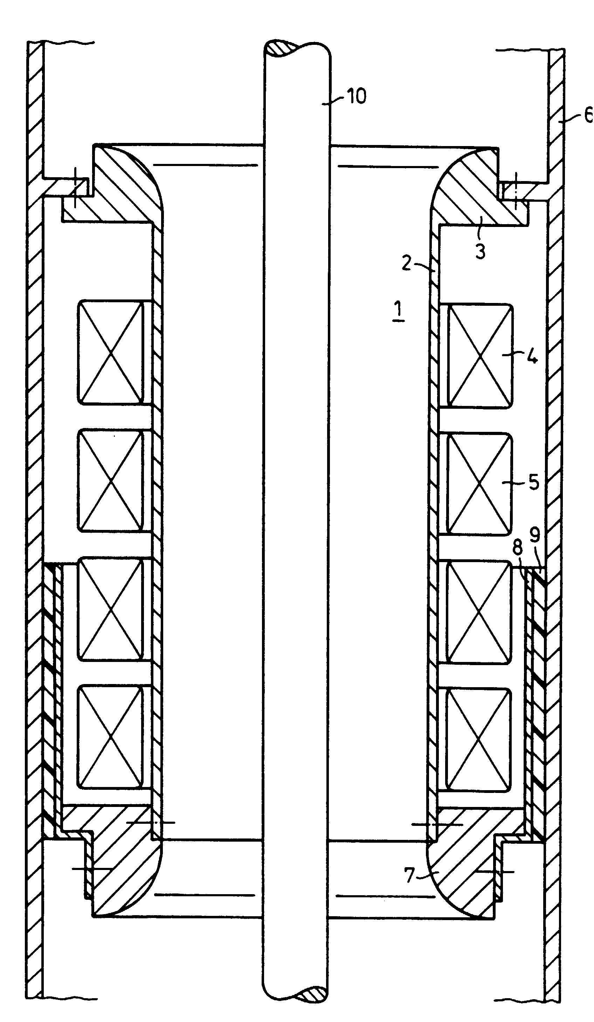

Dabei zeigt
die Figur schematisch im Längsschnitt ein rohrförmiges Kapselungsgehause mit einem eingebauten Ringkernstromwandler.

Der Stromwandler 1 weist ein als Gußteil ausgebildetes erstes Rohr 2 (Tragrohr) auf, in das eine erste Abschirmelektrode 3 integriert ist. Das erste Rohr 2 tragt die von der nicht dargestellten Sekundärwicklung umgebenen Ringkerne 4, 5, die mittels einer nicht dargestellten Vergußmasse vergossen und mit dem ersten Rohr 2 verbunden sind. Die Abschirmelektrode 3 ist leitend mit dem Kapselungsgehause 6 über eine Schraubverbindung verbunden.

An dem der ersten Abschirmelektrode 3 gegenüberliegenden Ende des Tragrohres 2 ist dieses mit einer zweiten Abschirmelektrode 7 mittels einer Verschraubung verbunden. An die zweite Abschirmelektrode 7 ist ein zweites Rohr 8 angeschraubt, das unter Zwischenlage einer Isolierschicht 9 an der Innenwand des Kapselungsgehauses 6 anliegt.

Das erste Rohr 2 mit den Ringkernen umgibt koaxial einen Hochspannungsleiter 10, der den zu messenden Strom führt.

## Patentansprüche

1. Metallgekapselte Hochspannungsschaltanlage mit einem zylindrischen Kapselungsgehause (6) und einem in diesem angeordneten Stromwandler (1), dessen Sekundärwicklung einen Hochspannungsleiter (10) koaxial umgibt, wobei zwischen der Sekundarwicklung des Stromwandlers (1) und dem Hochspannungsleiter (10) ein an seinem ersten Ende mit dem Kapselungsgehause (6) leitend verbundenes und an den übrigen Stellen von diesem elektrisch isoliertes erstes Rohr (2) sowie ein zweites Rohr (8) vorgesehen ist,
**dadurch gekennzeichnet,** daß
das erste Rohr (2) an seinem zweiten Ende mit dem zweiten Rohr (8) leitend verbunden ist, das unter Zwischenlage einer Isolierschicht (9) an der Innenwand des Kapselungsgehauses (6) derart anliegt, daß die Anlagefläche in Axialrichtung des Kapselungsgehauses (6) eine Länge aufweist, die groß ist gegen die Dicke der Isolierschicht (9).

2. Metallgekapselte Hochspannungsschaltanlage nach Anspruch 1,
**dadurch gekennzeichnet,** daß
das zweite Rohr (8) mit dem ersten Rohr (2) in axialer Richtung wenigstens teilweise überlappt.

3. Metallgekapselte Hochspannungsschaltanlage nach Anspruch 1 oder 2,
**dadurch gekennzeichnet,** daß
die Isolierschicht (9) aus einem Werkstoff besteht, der elektromagnetische Wellen stark dämpft.

4. Metallgekapselte Hochspannungsschaltanlage nach einem der vorangehenden Ansprüche,
**dadurch gekennzeichnet,** daß
die Isolierschicht (9) aus einen Kunststoff besteht.

5. Metallgekapselte Hochspannungsschaltanlage nach einem der vorangehenden Ansprüche,
**dadurch gekennzeichnet,** daß
das zweite Rohr (8) mit der Innenwand des Kapselungsgehauses (6) mittels der Isolierschicht (9) verklebt ist.

6. Metallgekapselte Hochspannungsschaltanlage nach einem der Ansprüche 1 bis 5,
**dadurch gekennzeichnet,** daß
das erste Rohr (2) mit dem zweiten Rohr (8) einstückig zusammenhangt, insbesondere daß das erste Rohr (2)
und das zweite Rohr (8) als ein einziges Gußteil ausgebildet sind.

7. Metallgekapselte Hochspannungsschaltanlage nach einem der Ansprüche 1 bis 5,
**dadurch gekennzeichnet,** daß
das zweite Rohr (8) mittels einer Abschirmelektrode (7) des Stromwandlers (1) mit dem ersten Rohr (2) leitend verbunden ist.

8. Metallgekapselte Hochspannungsschaltanlage nach einem der Ansprüche 1 bis 5,
**dadurch gekennzeichnet,** daß
das zweite Rohr (8) als nach außen umgebogene Krempe des ersten Rohres (2) ausgebildet ist.

## Claims

1. Metal-encased high-voltage switchgear with a cylindrical metal enclosure (6) and a current transformer (1) arranged therein, the secondary winding of which current transformer coaxially surrounds a high voltage conductor (10), with a first tube (2) and a second tube (8) being provided between the secondary winding of the current transformer (1) and the high-voltage conductor (10), the first tube (2) being conductively connected at its first end to the metal enclosure (6) and being electrically insulated therefrom at its other places, characterized in that the first tube (2) is conductively connected at its second end to the second tube (8), which abuts the inner wall of the metal enclosure (6) with the interposition of an insulating layer (9) in such a way that the contact surface in the axial direction of the metal enclosure (6) has a length which is great in comparison with the thickness of the insulating layer (9).

2. Metal-encased high voltage switchgear according to claim 1, characterized in that the second tube (8) overlaps at least partially with the first tube (2) in the axial direction.

3. Metal-encased high voltage switchgear according to claim 1 or 2, characterized in that the insulating layer (9) consists of a material which greatly attenuates electromagnetic waves.

4. Metal-encased high voltage switchgear according to one of the preceding claims, characterized in that the insulating layer (9) consists of a plastics material.

5. Metal-encased high voltage switchgear according to one of the preceding claims, characterized in that the second tube (8) is bonded to the inner wall of the metal enclosure (6) by means of the insulating layer (9).

6. Metal-encased high voltage switchgear according to one of claims 1 to 5, characterized in that the first tube (2) is connected to the second tube (8) so as to form one part, in particular that the first tube (2) and the second tube (8) are constructed as a single cast part.

7. Metal-encased high voltage switchgear according to one of claims 1 to 5, characterized in that the second tube (8) is conductively connected to the first tube (2) by means of a screening electrode (7) of the current transformer (1).

8. Metal-encased high voltage switchgear according to one of claims 1 to 5, characterized in that the second tube (8) is constructed as an outwardly bent rim of the first tube (2).

## Revendications

1. Installation de coupure haute tension à blindage métallique, comportant un boîtier (6) de blindage cylindrique et un transformateur (1) de courant qui est monté dans ce boîtier de blindage et dont l'enroulement secondaire entoure coaxialement un conducteur (10) haute tension, un premier tube (2) relié de manière conductrice au boîtier de blindage à sa première extrémité et isolé du point de vue électrique de ce boîtier de blindage aux autres points étant, ainsi qu'un deuxième tube (8), prévu entre l'enroulement secondaire du transformateur (1) de courant et le conducteur (10) haute tension, caractérisé en ce que le premier tube (2) est, à sa deuxième extrémité, relié de manière conductrice au deuxième tube (8) qui est en contact avec la paroi intérieure du boîtier (6) de blindage, avec interposition d'une couche (9) isolante, de telle manière que la surface de contact a dans la direction axiale du boîtier (6) de blindage une longueur qui est grande par rapport à l'épaisseur de la couche (9) isolante.

2. Installation de coupure haute tension à blindage métallique suivant la revendication 1, caractérisé en ce que le deuxième tube (8) et le premier tube (2) se chevauchent au moins partiellement dans la direction axiale.

3. Installation de coupure haute tension à blindage métallique suivant la revendication 1 ou 2, caractérisé en ce que la couche (9) isolante est en un matériau qui atténue fortement les ondes électromagnétiques.

4. Installation de coupure haute tension à blindage métallique suivant l'une des revendications précédentes, caractérisé en ce que la couche (9) isolante est en une matière plastique.

5. Installation de coupure haute tension à blindage métallique suivant l'une des revendications précédentes, caractérisé en ce que le deuxième tube (8) est collé à la paroi intérieure du boîtier (6) de blindage au moyen de la couche (9) isolante.

6. Installation de coupure haute tension à blindage métallique suivant l'une des revendications 1 à 5, caractérisé en ce que le premier tube (2) est continu d'une seule pièce avec le deuxième tube (8), notamment en ce que le premier tube (2) et le deuxième tube (8) sont réalisés en une seule pièce moulée.

7. Installation de coupure haute tension à blindage métallique suivant l'une des revendications 1 à 5, caractérisé en ce que le deuxième tube (8) est relié de manière conductrice au premier tube (2) au moyen d'une électrode (7) de protection du transformateur (1) de courant.

8. Installation de coupure haute tension à blindage métallique suivant l'une des revendications 1 à 5, caractérisé en ce que le deuxième tube (8) est réalisé en rebord recourbé vers l'extérieur du premier tube (2).
